# EUROPEAN PATENT SPECIFICATION

(11) **EP 2 415 138 B1**
(45) Date of publication and mention of the grant of the patent: **25.06.2014**
(21) Application number: 09779254.3
(22) Date of filing: 03.04.2009
(51) Int. Cl.: H02H 7/00, H02H 3/40, H02H 3/06, H02H 3/17

(54) **ELECTRIC BREAKER CIRCUIT AND METHOD OF OPERATING AN ELECTRIC BREAKER CIRCUIT**
SCHALTUNGSANORDNUNG FÜR LEISTUNGSSCHALTER UND BETRIEBSVERFAHREN DAZU
CIRCUIT DISJONCTEUR ELECTRIQUE ET PROCEDE DE FONCTIONNEMENT DE CIRCUIT DISJONCTEUR ELECTRIQUE

(43) Date of publication of application: 08.02.2012
(73) Proprietor: Enel Distribuzione S.p.A., 00198 Roma (IT)
(72) Inventor: VERONI, Fabio, I-20059 Vimercate (Milano) (IT)
(74) Representative: HOFFMANN EITLE
(86) International application number: PCT/EP2009/054026
(87) International publication number: WO 2010/112083

(56) References cited:
- WO-A-03/071659
- US-A- 6 081 123
- US-A1- 2007 070 558

## Description

The present invention relates to an electric breaker circuit for interrupting an electric load circuit. The present invention also relates to a method of operating an electric breaker circuit and to a building having an electrical installation including an electric breaker circuit.

Electrical breakers are typically provided in a power supply line in order to monitor and enforce limits on the power or current an electric load is permitted to draw from the power line, or to protect against the danger of electric shocks resulting from a fault in the insulation. An electrical breaker interrupts the electric circuit and thus interrupts the supply of electric power to the electric load if the power or current limit is exceeded. Alternatively or in addition, electric breakers interrupt the electric load circuit if a differential current is detected due to an insulation fault causing a current leakage to earth. An electric breaker typically includes a switch in series with the electric load circuit to effect the interruption.

Typically, the electric circuit breaker provides means for re-establishing the electric circuit. To this end, in a conventional breaker a lever or push button or the like is provided that enables a user to interact with the switch such that by closing the switch the electric load circuit can be re-established. This requires that the user, for example a customer of a utility or power distribution company, has access to the location where the electric circuit breaker is arranged.

For various reasons it can be necessary or advantageous to arrange the electric circuit breaker at a location that is inaccessible by the customer. In that case, provisions have to be taken to enable the customer to re-establish the supply of electric power after the electric circuit breaker has interrupted the electric circuit. As is well known, overload or fault conditions can arise for a number of different reasons. For example, a short circuit may inadvertently have been caused in the electric load circuit of the customer, or the customer may have connected too many electrical loads to the electric load circuit such that the load impedance of the electric load circuit falls below an acceptable minimum load impedance value.

From ES 2 102 954 A1 a differential circuit breaker is known that comprises an input for connection to a power supply line as well as an output for supplying electricity to the electric load circuit of a customer. A switch is arranged electrically between the input and the output for interrupting the supply of electric power to the electric load circuit by opening the switch in response to a fault condition in the electric load circuit caused by a leakage current from the phase wire to earth. Due to insufficient insulation of the phase wire, a difference arises in the current levels in the phase wire and in the neutral wire. The known circuit breaker has a relay switch that opens in response to the detection of this fault condition. This known electric circuit breaker automatically restores the electric circuit upon detecting that the leakage to earth due to an insufficient insulation no longer prevails. To achieve this, a pilot current is injected into the electric load circuit when the switch interrupts the electric circuit in order to evaluate the amount of insulation losses. Upon detection that the leakage earth current falls below a threshold, the relay switch is driven to re-establish the electric load circuit.

The present invention addresses the need of providing an electric breaker circuit that allows re-establishing the supply of electric power to the electric load circuit after having interrupted the electric load circuit even if the switch of the electric breaker circuit is arranged at a location inaccessible by the user. For safety reasons, the electric breaker circuit should not re-establish the supply of electric power to the electric load circuit without the user having commanded the electric breaker to do so.

An electric breaker circuit according to an embodiment of the present invention for interrupting an electric load circuit includes an input for connection to a power supply line and an output for supplying electricity to the electric load circuit; a switch arranged electrically between said input and said output for establishing the supply of electric power to the electric load circuit by closing the switch and interrupting the supply of electric power to the electric load circuit by opening the switch; means for opening/closing said switch in response to an opening/closing command signal; means for detecting the load impedance connected to the output of said electric breaker circuit; and means for generating a closing command signal for closing said switch upon detection of a decrease of the load impedance from a high impedance value to a lower impedance value.

A method of operating an electric breaker circuit according to an embodiment of the present invention includes the steps of detecting the load impedance connected to the output of the electric breaker circuit; and generating a closing command signal for closing the switch arranged electrically between an input and an output of the electric breaker circuit, upon detection of a decrease of the impedance of the electric load circuit from a high impedance value to a lower impedance value.

These embodiments of the present invention are advantageous in that the supply of electric power to the electric load circuit can be re-established no matter whether the electric breaker is arranged at an accessible location or at a location that is inaccessible by the customer. Even if the electric load circuit connected to the electric circuit breaker according to this embodiment comprises loads having a voltage dependent impedance that rises as a reaction to a voltage drop across the load, the electric circuit breaker will not inadvertently re-establish the supply of electric power to the electric circuit. This is because according to this embodiment, the electric breaker circuit will re-establish the electric load circuit upon detection of a decrease in the load impedance, such that an increase in the load impedance due to the behavior of certain types of electrical loads in reaction to a voltage drop caused by the interruption of the electric load circuit by the electric breaker will not immediately result in an inadvertent reestablishment of the electric load circuit with possibly dangerous or even disastrous consequences.

Depending on the particular application, embodiments of the present invention may include an overload detector for detecting whether an overload condition has occurred in the electric load circuit connected to the output terminals and outputting said opening command signal in response to the detection of an overload condition. However, the present invention is not limited to an overload detector being included in the electric breaker circuit. According to other embodiments, an overload detector may be arranged elsewhere in the power supply circuit or in the electric load circuit, or a closing command signal may be obtained from sources other than an overload detector. Moreover, instead of or in addition to detecting an overload condition, an insulation fault condition may be detected by a fault condition detector that generates an opening command signal in response to having detected a fault condition.

In one embodiment, the means for generating a closing command signal generates the closing command signal upon detection that the load impedance connected to the output of the electrical breaker circuit decreases while said switch is open. The means for generating the closing command signal may or may not perform a detection of a decrease of the load impedance while said switch is closed, and may or may not generate the closing command signal upon detection of a decrease of the load impedance while said switch is closed.

In one embodiment, the means for generating a closing command signal generates the closing command signal subject to the condition that the load impedance is above a minimum impedance threshold. In this way it can be avoided that re-establishing the supply of electric power to the electric load circuit directly results in an overload condition.

According to an embodiment, the means for generating a closing command signal generates the closing command signal subject to the condition that while the switch is open, an increase of the impedance level has been detected that precedes the decrease of the load impedance from a high impedance value to a lower impedance value. This embodiment is advantageous in that it avoids re-establishing the supply of electric power to the electric load circuit in situations wherein an overload condition in the electric load circuit has not been removed by the customer prior to causing a decrease of the load impedance.

According to an embodiment, the load impedance of the electric load circuit can be detected by means of applying a voltage to the electric load circuit and detecting a current flowing through the electric load circuit when the switch of the electric breaker circuit is open. There are numerous other suitable possibilities of detecting the load impedance of the electric load circuit. For example, instead of detecting the current flowing through the electric load circuit, it would be possible to inject a known current into the electric load circuit and measure the voltage drop across the electric load circuit. The present invention is not limited to any particular way of detecting the load impedance. Since the load impedance, the voltage across the load and the current through the load are interrelated in a manner well understood by the person skilled in the art, the detection of the load impedance is meant to comprise the detection of the current through the electric load circuit, the detection of a voltage drop across the electric load circuit or other ways of detecting the load impedance.

In one embodiment, the means for detecting the load impedance of the electric load circuit may include a bypass circuit connected across the switch. The bypass circuit may include a resistor and/or a capacitor or any other electric components connected to bypass the switch. In one embodiment, the bypass circuit may include a bypass switch and means for controlling the bypass switch in accordance with at least one of the open/close status of the switch between the input and output of the electric breaker circuit and the status of a supply contract of a customer associated with the electric breaker circuit. For example, if the status of the supply contract is such that the customer has to be completely disconnected from the power supply line, this can be achieved by means of opening the bypass switch in this embodiment.

In one embodiment, the means for detecting the load impedance may include a transformer having a first winding connected to be supplied by the input of the electric breaker circuit and a second winding connected to supply a voltage to the output of the electric breaker circuit. In this embodiment, it may be advantageous to have a switch connected in series with a winding of the transformer and means for controlling that switch in accordance with the open/close status of the switch between the input and output of the electric breaker circuit and/or the status of a supply contract of a customer associated with the electric breaker circuit.

According to one embodiment, the means for detecting the load impedance may include a power supply tester unit designed for injecting a pilot current into the electric load circuit when the switch between the input and output of the electric breaker circuit is open.

It may be advantageous to arrange an electric breaker circuit according to an embodiment of the present invention as one or more electric circuit breaker modules for example of the kind that can be rack mounted side by side on an appropriate fixture.

According to an embodiment of the present invention, an electrical installation in a building includes an electric breaker circuit according to an embodiment of the present invention arranged in a location inaccessible for persons not authorized by the utility operating the power supply line, as well as an electric load circuit connected to the electric breaker circuit. In this embodiment, interruption means are arranged to be operable by a customer of the utility, for interrupting and re-establishing at least a portion of the electric load circuit to thereby change the load impedance connected to the output of the electric breaker circuit. These interruption means can be used by the customer to conveniently and safely re-establish the supply of electric power to the electric load circuit of the customer without the customer having to access the location where the electric breaker circuit is arranged in the building.

In the following, embodiments of the present invention will be described in conjunction with the appended figures. Throughout the figures, similar or corresponding elements are denoted with the same reference numerals.
Fig. 1 shows a block diagram of an electric breaker circuit according to an embodiment of the present invention;
Fig. 2 shows a flow diagram to illustrate a method of operating an electrical breaker circuit according to an embodiment of the present invention;
Fig. 3a to 3c show embodiments of a bypass circuit;
Fig. 4 shows an embodiment of a building having an electrical installation including an electric breaker circuit according to an embodiment of the present invention; and
Fig. 5 shows another embodiment of an electrical installation in a building including an electric breaker circuit according to another embodiment of the present invention.

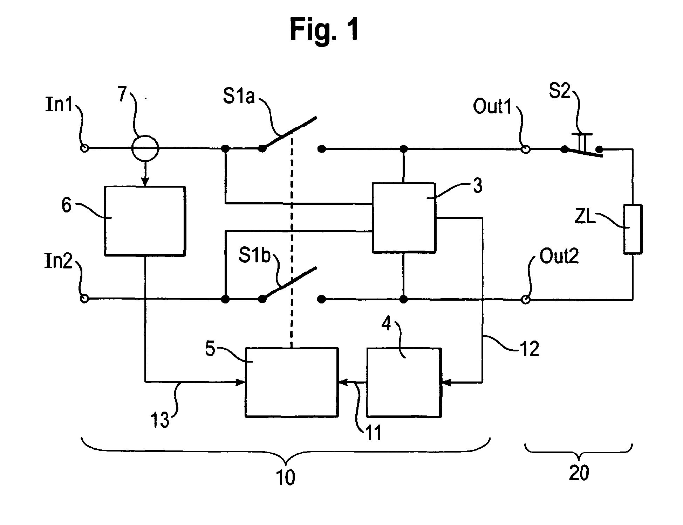

Fig. 1 shows a block diagram of an electric breaker circuit according to an embodiment of the present invention.

In this figure, S1a and S1b denote poles of a two pole switch. In1 and In2 denote terminals defining an input of the electric breaker circuit. Out1 and Out2 denote terminals defining an output of the electric breaker circuit 10. As shown in Fig. 1, the first switch S1a is connected between the input terminal In1 and the output terminal Out1. Similarly, switch S1b is connected between the input terminal In2 and the output terminal Out2 of the electric breaker circuit 10. ZL represents in a schematic manner the load impedance of an electric load circuit connected across the output Out1, Out2 of the electric circuit breaker. It has to be noted that ZL is no more than a symbolic representation of typically a number of different loads in the electric load circuit connected to the output Out1, Out2.

In this embodiment, S2 denotes a switch arranged in series with the electric load circuit at a location accessible by a customer of the power supply company or utility. The switch S2 is arranged such that when a customer operates this switch, the impedance connected to the output Out1, Out2 of the electric breaker circuit 10 is increased, and decreased when the switch S2 is released. In the particular embodiment shown in Fig. 1, this is achieved by means of the switch S2 interrupting the electric load circuit ZL when the customer operates a push button or lever of the switch S2. As soon as the push button or lever is released, the switch S2 reverts to its normally closed position. It has to be noted that the provision of the switch S2 can be advantageous. The present invention is, however, not limited to the provision of a switch S2. Other possibilities exist how to achieve a decrease in the load impedance ZL. For example, it may be sufficient to simply switch on a lamp or other load present in the electrical load circuit installation.

Reference numeral 3 in Fig. 1 denotes a circuit for detecting the load impedance connected to the output Out1, Out2 of the electric breaker circuit 10. Reference numeral 4 denotes means for generating a closing command signal 11 for closing the switch S1a, S1b upon detecting a decrease of the load impedance from a high impedance value to a lower impedance value. This operation of detection and the generation of a closing command signal can be executed independent from whether the switch S1a, S1b is actually open, or can be limited to times when the switch S1a, S1b is open. The detected load impedance value is reported by the load impedance detection circuit 3 via line 12 to the closing command signal generating circuit 4. The means 4 can for example be implemented using a suitably programmed microcontroller having an on chip AD converter for converting and processing the impedance detection signal 12 and generating the closing command signal 11. Reference numeral 5 denotes means for closing the switch S1a, S1b in response to the closing command signal 11.

In this embodiment, reference numeral 7 denotes a detector for detecting the load current or the power supplied to the input In1, In2 of the electric circuit breaker. The detected current or power value is processed by an overload detector 6. The overload detector 6 serves to detect whether an overload condition has occurred in the electric load circuit connected to the output Out1, Out2 of the electric breaker circuit. In response to the detection of an overload condition, the overload detector 6 outputs an opening command signal 13 to the means 5 or outputs an overload detection signal to the means 4 processing that signal.

In one embodiment, the means 5 and the switch S1a, S1b are constituted by means of a relay together with an appropriate driver circuit for driving the coil of the relay. Relays and driver circuits for driving the relay coil in response to an open signal and a closing signal, respectively, are well known as such in the art. Instead of using a relay, other possibilities of implementing the switch S1a, S1b are equally well suited for embodying the present invention. For example, instead of or in addition to providing the switch S1a, S1b with mechanically moving contacts, it would be possible to use solid state devices like Thyristors, MOSFETs, TRIACs, IGBTs or the like to achieve a switch that can be opened and closed in response to an opening command and a close command, respectively. All such alternatives which are as such well known in the art, are intended to be comprised in the scope of the present invention.

It has to be noted that while in this embodiment, a current or power sensor 7 as well as an overload detector 6 is shown as incorporated in the electric breaker circuit 10, the present invention is not limited to this but also comprises electric breaker circuits without having these elements 6 and 7 incorporated. Rather, an opening command signal 13 may equally well be supplied by circuitry external to the electric circuit breaker 10 in order to cause the switch S1a, S1b to open, without departing from the scope of the present invention. In addition or alternatively, a fault detector may be provided that outputs an insulation fault detection signal to the means 5 or means 4 for opening the switch S1a, S1b.

In the embodiment of Fig. 1, the switch S1a, S1b is shown to have two poles. A person skilled in the art will immediately appreciate that for interrupting the electric load circuit 20, a single pole switch would be sufficient. In order to achieve a full disconnection of all phases the neutral line from the input side of the electric breaker circuit, it may be advantageous to provide the switch S1 with a number of poles corresponding to the number of lines constituting the electric load circuit 20. The electric load circuit 20 need not be single phase as shown in the embodiment of Fig. 1, but can equally well be poly phase, for example three phase.

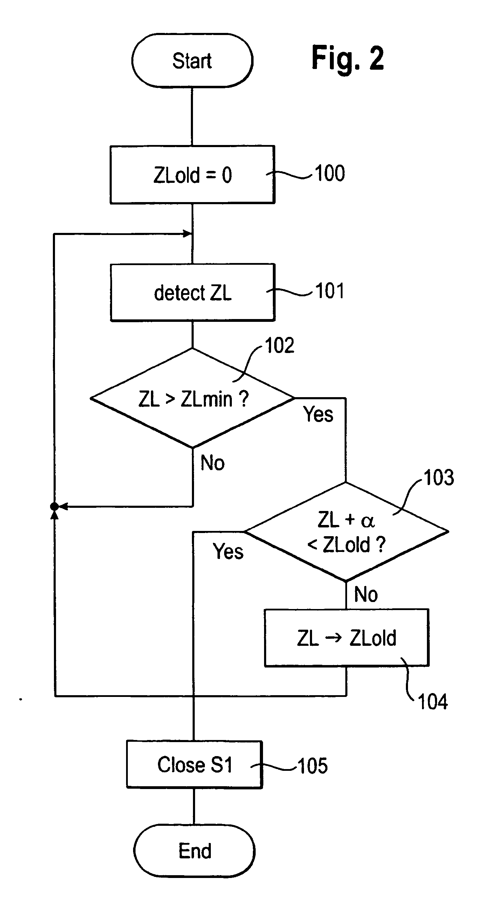

Fig. 2 shows a flow diagram to illustrate a method of operating an electric breaker circuit according to an embodiment of the present invention.

The flow of operations shown in the embodiment of Fig. 2 starts after the switch between the input and the output of the electric breaker circuit has opened and the supply of electric power to the electric load circuit 20 in Fig. 1 has been interrupted. The embodiment shown in Fig. 2 serves to detect whether the switch S1 of the electric breaker circuit has to be closed again to re-establish the supply of electric power to the electric load circuit. The embodiment of Fig. 2 detects at first whether the load impedance ZL of the electric load circuit 20 is larger than a minimum load impedance ZLmin. This condition serves to avoid that a new overload condition arises immediately when re-establishing the power supply to the electric load circuit. If the load impedance ZL is larger than the minimum load impedance ZLmin, in the embodiment of Fig. 2 it is then detected whether the load impedance ZL changes from a given value to a lower value. If such a decrease in the load impedance ZL is detected, the switch S1 of the electric breaker circuit is closed again to re-establish the power supply to the electric load circuit. As illustrated in Fig. 1 in the form of a nonlimiting example, a decrease in the load impedance ZL may be caused e.g. by means of at first opening the switch S2 provided in the electric load circuit at a location accessible by the customer, and then reclosing this switch S2 such that the load impedance connected to the output Out1, Out2 of the electric breaker circuit at first increases and thereafter decreases. The decrease in the load impedance ZL seen at the output Out1, Out2 of the electric breaker circuit 10 causes the switch S1 between the input and the output of the electric breaker circuit to be closed such that the power supply to the electric load circuit is re-established.

More particularly, in step 100 the embodiment shown in Fig. 2, a temporary variable ZLold is set to an initial value not higher than the lowest impedance that might practically arise at the output of the electric breaker circuit. In the nonlimiting example given, ZLold is set to zero. The flow proceeds to operation 101 where the load impedance ZL connected to the output of the electric breaker circuit is detected. In the next operation 102, the detected load impedance ZL is compared with a minimum load impedance value ZLmin. If the detected load impedance is not larger than the minimum load impedance ZLmin (branch "NO" in 102), this indicates that a re-establishment of power supply to the electric load circuit should be avoided. Otherwise, an overload condition or other unsafe situation would have to be expected to arise. Therefore, in this case the flow proceeds to operation 101 and again detects the load impedance ZL until this load impedance exceeds the minimum load impedance ZLmin. If in operation 102 it is detected that the load impedance ZL exceeds the minimum load impedance ZLmin (branch "YES" in 102), this is an indication that an overload condition in the electric load circuit 20 of Fig. 1 would not arise upon re-establishing the power supply. Therefore, in this case ("YES" in 102) the flow proceeds to operation 103. The operation 103 in cooperation with 104 serves to detect a decrease in the load impedance ZL. To do so, in operation 103 the detected load impedance ZL augmented by a margin a is compared with the temporary variable ZLold. If ZL + α is found to be less than ZLold (branch "NO" in 103), in operation 104 the presently detected load impedance ZL is written into ZLold and the flow proceeds with operation 101, thus establishing a loop 101 to 104 that tracks in ZLold the load impedance ZL as long as ZL does not decrease from one cycle through the loop 101 to 104 to the next by more than the margin α.

If, on the other hand, the load impedance ZL detected in operation 101 has decreased by more than the margin α from one cycle to the next through the loop 101 to 104, it will then be found in operation 103 that ZL + α is smaller than the temporary load impedance value ZLold previously stored in operation 104. In this case (branch "YES" in 103) the load impedance ZL has decreased from a high value to a lower value from one cycle through the loop 101 to 104 to the next. In response to the detection of this decrease in the load impedance ZL, the flow in the embodiment of Fig. 2 proceeds to operation 105 to reclose the switch S1 between the input In and the output Out of the electric breaker circuit 10. Then the flow in this embodiment terminates.

According to the example embodiment shown in Fig. 2, in operation 104 the detected load impedance value ZL is stored as the temporary variable ZLold. In this way, the operations 103 and 104 detect whether the load impedance ZL has decreased by more than the margin value α from one cycle through these operations to the next. Of course, there are many alternative implementations of detecting a decrease of the load impedance ZL form a first impedance value to a lower impedance value, and the present invention shall not be construed to be limited to the embodiment shown in Fig. 2. For example, instead of storing the detected impedance value ZL in operation 104 whenever the "NO" branch of operation 103 is taken, it would equally well be possible to update the detected impedance value ZL in the temporary variable ZLold subject to the additional condition that ZL is not less than the value previously stored in ZLold. In that case the flow of operations would also react to slow changes in the detected impedance ZL at a change rate less than α per cycle through the operations 101 to 104.

Although the embodiment of Fig. 2 includes a query in operation 102 whether the detected load impedance exceeds a minimum load impedance ZLmin, the present invention should not be construed to be limited to querying this condition. Additionally or instead, it may also be advantageous to query whether an increase of the load impedance ZL has been detected, and to generate the closing command signal subject to the condition that an increase of the load impedance ZL has been detected prior to a decrease of the load impedance ZL. This makes a further contribution to prevent that the supply of electric power is re-established inadvertently.

There are numerous possibilities to detect a decrease of the load impedance ZL, and all these possibilities shall be considered to fall within the scope of the present invention.

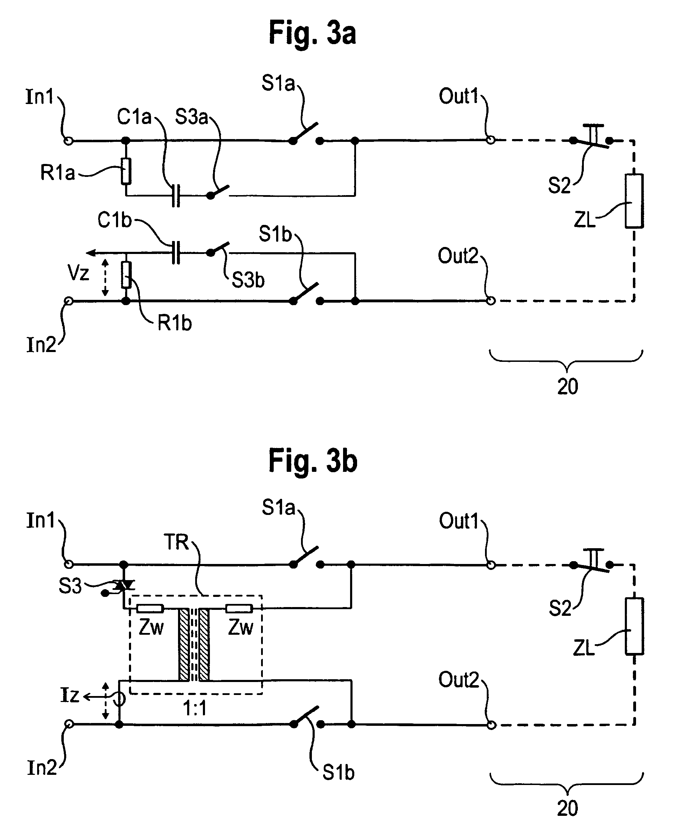

Fig. 3a shows a first embodiment of a bypass circuit included in the circuit 3 shown in Fig. 1 for detecting the load impedance ZL of the electric load circuit 20. The bypass circuit serves to bypass the switch S1 when necessary, in order to cause an electric pilot current to flow through the electric load circuit 20 when the power supply to the electric load circuit 20 is interrupted.

In Fig. 3a, the bypass circuit to bypass the switch S1a comprises a resistor R1a, a capacitor C1a as well as a switch S3a connected in series. This bypass circuit is connected in parallel to the switch S1a. Similarly, a resistor R1b, a capacitor Clb and a switch S3b are connected in series to form a bypass circuit for the switch S1b. The resistors and capacitors in this bypass circuit of Fig. 3a serve to limit the level of the pilot current flowing through the load impedance of the electric load circuit 20 to an appropriate level that complies with safety requirements. A voltage Vz across one of the resistors or capacitors that appears as a reaction to the pilot current through the load circuit and the bypass circuit is processed by suitable amplifiers and rectifiers to provide a detection signal 12 that indicates the impedance of the electric load circuit at the output of the electric breaker circuit.

In the embodiment of Fig. 3a, the switches S3a and S3b can be controlled to allow a pilot current to flow through the electric load circuit 20 when these switches are in the closed position, or to prevent a pilot current from flowing when these switches are in the open position, in order to fully disconnect the electric load circuit 20 from the power supply line at the input side of the electric breaker circuit. For example, it may be advantageous to keep the bypass switches S3a and S3b open if the customer's power supply contract with the power supply company or utility has expired. Also, it can be advantageous to keep the switches S3a, S3b open as long as the main switch S1a, S1b is closed in order to avoid spurious induced voltages across the resistor R1b or any other impedance of the bypass circuit which acts as a load impedance detection means.

Fig. 3b shows another embodiment of a bypass circuit within the load impedance detection circuit 3 of Fig. 1. The embodiment of Fig. 3b provides a transformer TR with a primary winding having a winding impedance Zw. A switch S3 is connected in series with the primary winding. The series connection of the switch S3 and the primary winding is connected across the input In1, In2 of the electric breaker circuit. A secondary winding of the transformer TR is connected to the output Out1, Out2 of the electric breaker circuit. Moreover, this embodiment of a bypass circuit includes a current sensor for sensing the current Iz flowing in the primary winding of the transformer TR.

In operation, when the switch S3, in this embodiment a TRIAC, is in the closed state, the voltage at the input side of the electric breaker circuit appears across the primary winding, this causing a secondary voltage to appear across the secondary winding of the transformer and thus across the output Out1, Out2 of the electric breaker circuit. As a result, a pilot current flows through the electric load circuit 20 when the switches S1a, S1b are open. The current Iz through the primary winding can then be used to detect the current through the secondary winding of the transformer TR and thus the impedance ZL of the electric load circuit 20. The switch S3 serves the same purpose as described above with respect to the switches S3a, S3b of Fig. 3a.

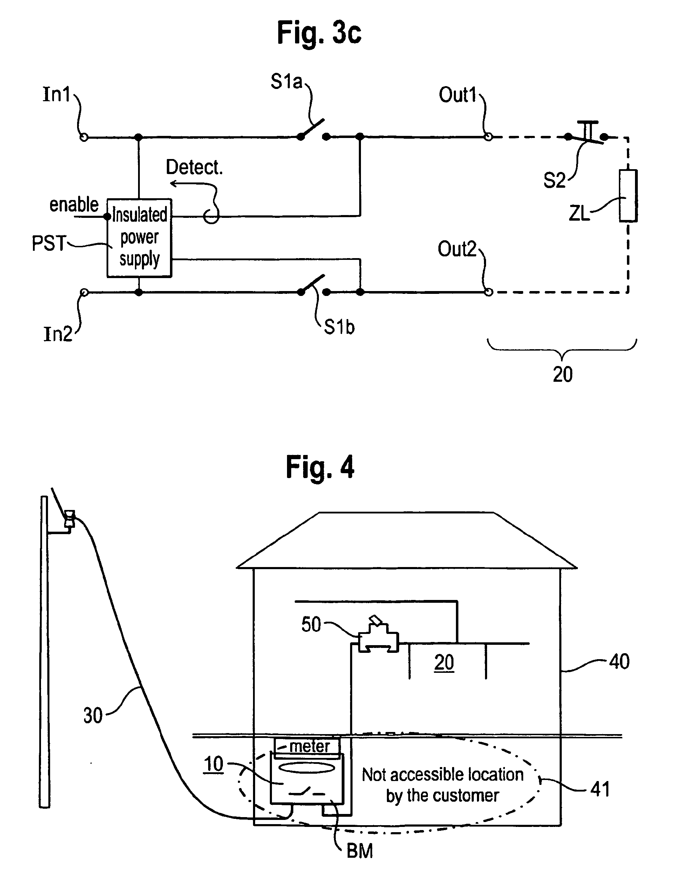

Fig. 3c shows a further embodiment of a bypass circuit for detecting the load impedance of the electric load circuit 20 when the switch S1a and S1b is open. This embodiment uses an insulated power supply in the form of a power supply tester unit PST for injecting a pilot current into the electric load circuit when the switch S1a, S1b is open. The load impedance ZL of the electric load circuit can be detected by means of detecting the current Iz as shown in Fig. 3c.

The figures 3a to 3c show examples in order to illustrate some possibilities of detecting the electric load impedance ZL when the switch S1a, S1b between the input and the output of the electric circuit breaker is open. These examples shall not be construed as limiting the present invention. Various other possibilities of detecting the load impedance ZL of the electric load circuit exist, and all means for detecting this impedance shall be included in the scope of the present invention.

Fig. 4 shows an embodiment of an electrical installation in a building which includes an electric breaker circuit according to the present invention. In Fig. 4, reference numeral 30 denotes a power supply cable connecting a building 40 of a customer to the power distribution grid of a power supply company or utility. The building 40 comprises a location 41 that is inaccessible for the customer. For example, the location 41 may be accessible exclusively by personnel authorized by the power supply company or utility. The location 41 may be a locked room or other space suitably sealed and secured by the power supply company against unauthorized access.

Within the location 41 inaccessible by the customer, an electric breaker circuit 10 according to the present invention is arranged. In this embodiment, the electric breaker circuit 10 takes the form of a breaker module BM that also includes an electricity consumption metering function. As shown in Fig. 4, the breaker module BM is arranged between the power supply line 30 and the electric load circuit 20.

Reference numeral 50 in Fig. 4 denotes a switch module including a switch S2 shown in Fig. 1. The switch module 50 is arranged at a location accessible by the customer. The load circuit 20 comprises various electrical loads like lamps, household appliances and the like not shown in Fig. 4.

In case an overload condition occurs in the electric load circuit 20, the breaker module BM including the electric breaker circuit 10 according to the present invention will open and thus interrupt the supply of electric power to the electric load circuit 20. In order to re-establish the electric load circuit, in the embodiment of Fig. 4 the customer may operate the switch module 50 to open the switch S2. This will cause the load impedance ZL connected to the breaker module BM to rise to almost infinity. By subsequently operating the switch module 50 such that the switch S2 in that module is closed, the load impedance ZL connected to the electric breaker module BM will decrease again to a lower value than before when the switch S2 in the switch module 50 was open. In response to detecting this decrease in the load impedance ZL, the breaker module BM will issue a closing command signal to the switch S1a, S1b shown in Fig. 1 in order to re-establish the supply of electric power to the electric load circuit 20.

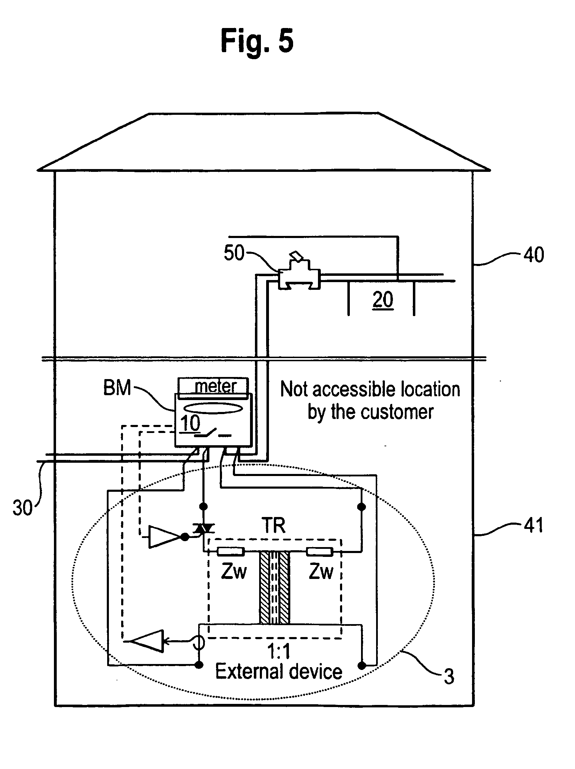

Fig. 5 shows another embodiment of an electrical installation in a building, including an electric breaker circuit according to another embodiment of the present invention. This embodiment differs from the embodiment in Fig. 4 in that the electric breaker circuit 10 comprises a breaker module BM that does not include the circuit for detecting the load impedance of the electric load circuit 20. The circuit 3 for detecting the load impedance of the electric load circuit is provided as a device external to the breaker module BM, preferably in the form of an additional module that is rack mountable together with the breaker module BM. The modular example of an electric breaker circuit according to the embodiment of Fig. 5 is advantageous in that breaker modules, impedance detection modules 3 and preferably also meter modules can be arranged in combination or stand alone, depending on the particular needs of the individual installation.

## Claims

1. An electric breaker circuit (10) for interrupting an electric load circuit (20), the electric breaker circuit (10) including:
- an input (In1, In2) for connection to a power supply line (30);
- an output (Out1, Out2) for supplying electricity to the electric load circuit (20);
- a switch (S1a, S1b) arranged electrically between said input (In1, In2) and said output (Out1, Out2) for establishing the supply of electric power to the electrical load circuit (20) by closing the switch (S1a, S1b) and interrupting the supply of electrical power to the electrical load circuit (20) by opening the switch (S1a, S1b) ;
- means (5) for closing said switch in response to a closing command signal (11);
- means (5) for opening said switch (S1a, S1b) in response to an opening command signal (13); and
- means (3) for detecting the load impedance connected to the output (Out1, Out2) of said electric breaker circuit (10);
**characterised by**
- means (4) for generating a closing command signal (11) for closing said switch (S1a, S1b) upon detection of a decrease of the load impedance.

2. The electric breaker circuit according to claim 1, including
- at least one of
an overload detector (6) for detecting whether an overload condition has occurred in the electric load circuit connected to the output terminals (Out1, Out2) and outputting an opening command signal (13) in response to the detection of an overload condition, and
an insulation fault detector for detecting whether an insulation fault has occurred in the electric load circuit connected to the output terminals (Out1, Out2) and outputting an opening command signal in response to the detection of an insulation fault condition.

3. The electric breaker circuit (10) according to claim 1 or 2, wherein said means (4) for generating a closing command signal (11) generates said closing command signal subject to the condition (102) that said load impedance is above a minimum impedance threshold.

4. The electric breaker circuit (10) according to claim 1, 2 or 3, wherein said means (4) for generating a closing command signal (11) generates said closing command signal (11) subject to the condition that while said switch (S1a, S1b) is open an increase of said impedance level has been detected that precedes said decrease of the load impedance.

5. The electric breaker circuit (10) according to any one of the preceding claims, wherein said means (3) for detecting the load impedance of said electric load circuit is adapted to apply a voltage to said electric load circuit and detect a current flowing through the electric load circuit when said switch (S1a, S1b) is open.

6. The electric breaker circuit (10) according to any one of the preceding claims, wherein said means (3) for detecting the load impedance of said electrical load circuit includes a bypass circuit (R1a, b; C1a, b) connected across said switch (S1a, S1b).

7. The electric breaker circuit (10) according to claim 6, wherein said bypass circuit includes a resistor (R1a, b) and/or a capacitor (C1a, b).

8. The electric breaker circuit (10) according to claim 7, wherein said bypass circuit includes a bypass switch (S3a, S3b) and means for controlling said bypass switch in accordance with the open/close status of the switch (S1a, S1b) between said input (In1, In2) and said output (Out1, Out2).

9. The electric breaker circuit (10) according to any one of the claims 1 to 5, wherein said means (3) for detecting the load impedance connected to the output (Out1, Out2) of the electric breaker circuit (10) includes a transformer (TR) having a first winding connected to be supplied by the input of the electric breaker circuit (10) and a second winding connected to supply a voltage to the output of the electric breaker circuit (10).

10. The electric breaker circuit (10) according to claim 9, including a switch (S3) connected in series with one of the first winding and the second winding of the transformer (TR) and means for controlling said switch (S3) in accordance with the open/close status of the switch (S1a, S1b) between said input (In1, In2) and said output (Out1, Out2).

11. An electric breaker circuit (10) according to any one of the claims 1 to 5, wherein said means (3) for detecting the load impedance includes a power supply tester unit (PST) designed for injecting a pilot current into the electric load circuit when said switch (S1a, S1b) is open.

12. An electric circuit breaker module (BM) including an electrical breaker circuit (10) according to any one of the preceding claims.

13. A method of operating an electrical breaker circuit (10) including a switch (S1a, S1b) arranged electrically between an input (In1, In2) connected to a power supply line (30) and an output (Out1, Out2) connected to supply an electrical load circuit (20), for establishing the supply of electric power to the electrical load circuit (20) by closing the switch (S1a, S1b) and interrupting the supply of electric power to the electrical load circuit (20) by opening the switch (S1a, S1b); the method including the step of
- detecting (101) the load impedance connected to the output (Out1, Out2) of said electric breaker circuit (10); **characterised by**
- generating (105) a closing command signal (11) for closing said switch (S1a, S1b) upon detection of a decrease (103) of the impedance of the electric load circuit (20).

14. The method according to claim 13, including generating said closing command signal (11) subject to the condition (102) that said lower impedance is above a minimum impedance threshold.

15. The method according to claim 13 or 14, wherein said closing command signal (11) is generated subject to the condition that while said switch is open, an increase of said impedance has been detected (102) prior to said detection of a decrease (103) of the impedance.

16. A building (40) having an electrical installation including
- an electric breaker circuit (10) according to any one of the claims 1 to 12 for connection to a power supply line (30) of a utility and arranged in a location (41) inaccessible for persons not authorized by the utility;
- an electric load circuit (20) connected to said electric breaker circuit (10); and
- interruption means (50) arranged to be operable by a customer of the utility, for interrupting and establishing at least a portion of said electric load circuit (20) to thereby change the load impedance connected to the output (Out1, Out2) of the electric breaker circuit (10).

## Patentansprüche

1. Elektrischer Unterbrecherschaltkreis (10) zum Unterbrechen eines elektrischen Lastkreises (20), wobei der elektrische Unterbrecherschaltkreis (10) Folgendes enthält:
- einen Eingang (In1, In2) zum Verbinden mit einer Stromzuleitung (30);
- einen Ausgang (Out1, Out2) zum Zuführen von Elektrizität zu dem elektrischen Lastkreis (20);
- einen Schalter (S1a, Slb), der elektrisch zwischen dem Eingang (In1, In2) und dem Ausgang (Out1, Out2) angeordnet ist, zum Herstellen der Zufuhr von elektrischem Strom zu dem elektrischen Lastkreis (20) durch Schließen des Schalters (S1a, S1b) und Unterbrechen der Zufuhr von elektrischem Strom zu dem elektrischen Lastkreis (20) durch Öffnen des Schalters (S1a, S1b);
- ein Mittel (5) zum Schließen des Schalters in Reaktion auf ein Schließbefehlsignal (11);
- ein Mittel (5) zum Öffnen des Schalters (S1a, S1b) in Reaktion auf ein Öffnungsbefehlsignal (13); und
- ein Mittel (3) zum Detektieren der Lastimpedanz, die mit dem Ausgang (Out1, Out2) des elektrischen Unterbrecherschaltkreises (10) verbunden ist;
**gekennzeichnet durch**
- ein Mittel (4) zum Generieren eines Schließbefehlsignals (11) zum Schließen des Schalters (S1a, S1b) bei Detektion einer Verringerung der Lastimpedanz.

2. Elektrischer Unterbrecherschaltkreis nach Anspruch 1, der mindestens eines von Folgendem enthält:
einen Überlastdetektor (6) zum Detektieren, ob ein Überlastzustand in dem elektrischen Lastkreis, der mit den Ausgangsanschlüssen (Out1, Out2) verbunden ist, eingetreten ist, und Ausgeben eines Öffnungsbefehlsignals (13) in Reaktion auf die Detektion eines Überlastzustands, und
einen Isolationsfehlerdetektor zum Detektieren, ob ein Isolationsfehler in dem elektrischen Lastkreis, der mit den Ausgangsanschlüssen (Out1, Out2) verbunden ist, eingetreten ist, und Ausgeben eines Öffnungsbefehlsignals in Reaktion auf die Detektion eines Isolationsfehlerzustands.

3. Elektrischer Unterbrecherschaltkreis (10) nach Anspruch 1 oder 2, wobei das Mittel (4) zum Generieren eines Schließbefehlsignals (11) das Schließbefehlsignal unter der Bedingung (102) generiert, dass die Lastimpedanz über einer Mindestimpedanzschwelle liegt.

4. Elektrischer Unterbrecherschaltkreis (10) nach Anspruch 1, 2 oder 3, wobei das Mittel (4) zum Generieren eines Schließbefehlsignal (11) den Schließbefehlsignal (11) unter der Bedingung generiert, dass, während der Schalter (S1a, S1b) offen ist, eine Erhöhung des Impedanzpegels detektiert wurde, die der Verringerung der Lastimpedanz vorausgeht.

5. Elektrischer Unterbrecherschaltkreis (10) nach einem der vorangehenden Ansprüche, wobei das Mittel (3) zum Detektieren der Lastimpedanz des elektrischen Lastkreises dafür ausgelegt ist, eine Spannung an den elektrischen Lastkreis anzulegen und einen Strom zu detektieren, der durch den elektrischen Lastkreis fließt, wenn der Schalter (S1a, S1b) offen ist.

6. Elektrischer Unterbrecherschaltkreis (10) nach einem der vorangehenden Ansprüche, wobei das Mittel (3) zum Detektieren der Lastimpedanz des elektrischen Lastkreises einen Umgehungsschaltkreis (R1a, b; C1a, b) enthält, der mit dem Schalter (S1a, S1b) verbunden ist.

7. Elektrischer Unterbrecherschaltkreis (10) nach Anspruch 6, wobei der Umgehungsschaltkreis einen Widerstand (R1a, b) und/oder einen Kondensator (C1a, b) enthält.

8. Elektrischer Unterbrecherschaltkreis (10) nach Anspruch 7, wobei der Umgehungsschaltkreis einen Umgehungsschalter (S3a, S3b) und ein Mittel zum Steuern des Umgehungsschalters gemäß dem Offen/Geschlossen-Status des Schalters (S1a, S1b) zwischen dem Eingang (In1, In2) und dem Ausgang (Out1, Out2) enthält.

9. Elektrischer Unterbrecherschaltkreis (10) nach einem der Ansprüche 1 bis 5, wobei das Mittel (3) zum Detektieren der Lastimpedanz, das mit dem Ausgang (Out1, Out2) des elektrischen Unterbrecherschaltkreises (10) verbunden ist, einen Transformator (TR) enthält, der eine erste Wicklung aufweist, die dafür verbunden ist, durch den Eingang des elektrischen Unterbrecherschaltkreises (10) versorgt zu werden, und eine zweite Wicklung aufweist, die dafür verbunden ist, eine Spannung an den Ausgang des elektrischen Unterbrecherschaltkreises (10) anzulegen.

10. Elektrischer Unterbrecherschaltkreis (10) nach Anspruch 9, der Folgendes enthält: einen Schalter (S3), der in Reihe mit der ersten Wicklung oder mit der zweiten Wicklung des Transformators (TR) geschaltet ist; und ein Mittel zum Steuern des Schalters (S3) gemäß dem Offen/Geschlossen-Status des Schalters (S1a, S1b) zwischen dem Eingang (In1, In2) und dem Ausgang (Out1, Out2).

11. Elektrischer Unterbrecherschaltkreis (10) nach einem der Ansprüche 1 bis 5, wobei das Mittel (3) zum Detektieren der Lastimpedanz eine Stromversorgungstestereinheit (PST) enthält, die dafür ausgelegt ist, einen Pilotstrom in den elektrischen Lastkreis einzuspeisen, wenn der Schalter (S1a, S1b) offen ist.

12. Elektrisches Leistungsschaltermodul (BM), das einen elektrischen Unterbrecherschaltkreis (10) nach einem der vorangehenden Ansprüche enthält.

13. Verfahren zum Betreiben eines elektrischen Unterbrecherschaltkreises (10), der einen Schalter (S1a, S1b) enthält, der elektrisch zwischen einem Eingang (In1, In2), der mit einer Stromzuleitung (30) verbunden ist, und einem Ausgang (Out1, Out2), der dafür verbunden ist, einen elektrischen Lastkreis (20) zu versorgen, angeordnet ist, zum Herstellen der Zufuhr von elektrischem Strom zu dem elektrischen Lastkreis (20) durch Schließen des Schalters (S1a, S1b) und Unterbrechen der Zufuhr von elektrischem Strom zu dem elektrischen Lastkreis (20) durch Öffnen des Schalters (S1a, S1b); wobei das Verfahren folgende Schritte enthält:
- Detektieren (101) der Lastimpedanz, die mit dem Ausgang (Out1, Out2) des elektrischen Unterbrecherschaltkreises (10) verbunden ist; **gekennzeichnet durch**
- Generieren (105) eines Schließbefehlsignals (11) zum Schließen des Schalters (S1a, S1b) bei Detektion einer Verringerung (103) der Impedanz des elektrischen Lastkreises (20).

14. Verfahren nach Anspruch 13, welches das Generieren des Schließbefehlsignals (11) unter der Bedingung (102) enthält, dass die niedrigere Impedanz über einer Mindestimpedanzschwelle liegt.

15. Verfahren nach Anspruch 13 oder 14, wobei das Schließbefehlsignal (11) unter der Bedingung generiert wird, dass, während der Schalter offen ist, eine Erhöhung der Impedanz vor der Detektion einer Verringerung (103) der Impedanz detektiert wurde (102).

16. Gebäude (40) mit einer Elektroinstallation, die Folgendes enthält:
- einen elektrischen Unterbrecherschaltkreis (10) nach einem der Ansprüche 1 bis 12 zum Verbinden mit einer Stromzuleitung (30) eines Versorgungsunternehmens, und der an einem Ort (41) angeordnet ist, der für Personen, die durch das Versorgungsunternehmen nicht befugt wurden, unzugänglich ist;
- einen elektrischen Lastkreis (20), der mit dem elektrischen Unterbrecherschaltkreis (10) verbunden ist; und
- ein Unterbrechungsmittel (50), das dafür ausgelegt ist, durch einen Kunden des Versorgungsunternehmens bedient zu werden, zum Unterbrechen und Herstellen mindestens eines Abschnitts des elektrischen Lastkreises (20), um dadurch die Lastimpedanz zu ändern, die mit dem Ausgang (Out1, Out2) des elektrischen Unterbrecherschaltkreises (10) verbunden ist.

## Revendications

1. Circuit disjoncteur électrique (10) permettant l'interruption d'un circuit de charge électrique (20), le circuit disjoncteur électrique (10) comportant :
une entrée (In1 In2) pour une connexion à une ligne d'alimentation électrique (30) ;
une sortie (Out1, Out2) pour l'alimentation du circuit de charge électrique (20) en électricité ;
un commutateur (S1a, S1b) agencé électriquement entre ladite entrée (In1 In2) et ladite sortie (Out1, Out2) afin d'établir l'alimentation du circuit de charge électrique (20) en énergie électrique, par la fermeture du commutateur (S1a, S1b) et d'interrompre l'alimentation du circuit de charge électrique (20) en énergie électrique par l'ouverture du commutateur (S1a, S1b).
un moyen (5) permettant de fermer ledit commutateur en réponse à un signal de commande de fermeture (11) ;
un moyen (5) permettant d'ouvrir ledit commutateur (S1a, S1b) en réponse à un signal de commande d'ouverture (13) ; et
un moyen (3) permettant de détecter l'impédance de charge reliée à la sortie (Out1, Out2) dudit circuit disjoncteur électrique (10) ;
**caractérisé par**
un moyen (4) permettant de générer un signal de commande de fermeture (11) permettant de fermer ledit commutateur (S1a, S1b) lors de la détection d'une diminution de l'impédance de charge.

2. Circuit disjoncteur électrique selon la revendication 1, comportant
au moins l'un parmi
un détecteur de surcharge (6) permettant de détecter si une condition de surcharge s'est produite dans le circuit de charge électrique relié aux bornes de sortie (Out1, Out2) et de délivrer en sortie un signal de commande d'ouverture (13) en réponse à la détection d'une condition de surcharge, et
un détecteur de défaut d'isolement permettant de détecter si un défaut d'isolement s'est produit dans le circuit de charge électrique relié aux bornes de sortie (Out1, Out2) et de délivrer en sortie un signal de commande d'ouverture en réponse à la détection d'une condition de défaut d'isolement.

3. Circuit disjoncteur électrique (10) selon la revendication 1 ou 2, dans lequel ledit moyen (4) permettant de générer un signal de commande de fermeture (11) génère ledit signal de commande de fermeture à la condition (102) que ladite impédance de charge soit au-dessus d'un seuil d'impédance minimal.

4. Circuit disjoncteur électrique (10) selon la revendication 1, 2 ou 3, dans lequel ledit moyen (4) permettant de générer un signal de commande de fermeture (11) génère ledit signal de commande de fermeture (11) à la condition que, pendant que ledit commutateur (S1a, S1b) est ouvert une augmentation dudit niveau d'impédance, qui précède ladite diminution de l'impédance de charge, ait été détectée.

5. Circuit disjoncteur électrique (10) selon l'une quelconque des revendications précédentes, dans lequel ledit moyen (3) permettant de détecter l'impédance de charge dudit circuit de charge électrique est adapté pour appliquer une tension audit circuit de charge électrique et pour détecter un courant circulant à travers le circuit de charge électrique quand ledit commutateur (S1a, S1b) est ouvert.

6. Circuit disjoncteur électrique (10) selon l'une quelconque des revendications précédentes, dans lequel ledit moyen (3) permettant de détecter l'impédance de charge dudit circuit de charge électrique comporte un circuit de dérivation (R1a, b ; C1a, b) relié à travers ledit commutateur (S1a, S1b).

7. Circuit disjoncteur électrique (10) selon la revendication 6, dans lequel ledit circuit de dérivation comporte une résistance (R1a, b) et/ou un condensateur (C1a, b).

8. Circuit disjoncteur électrique (10) selon la revendication 7, dans lequel ledit circuit de dérivation comporte un commutateur de dérivation (S3a, S3b) et un moyen permettant de commander ledit commutateur de dérivation conformément à l'état d'ouverture/de fermeture du commutateur (S1a, S1b) entre ladite entrée (In1, In2) et ladite sortie (Out1, Out2).

9. Circuit disjoncteur électrique (10) selon l'une quelconque des revendications 1 à 5, dans lequel ledit moyen (3) permettant de détecter l'impédance de charge reliée à la sortie (Out1, Out2) du circuit disjoncteur électrique (10) comporte un transformateur (TR) présentant un premier enroulement relié de manière à être alimenté par l'entrée du circuit disjoncteur électrique (10) et un deuxième enroulement relié de manière à alimenter la sortie du circuit disjoncteur électrique (10) en tension.

10. Circuit disjoncteur électrique (10) selon la revendication 9, comportant un commutateur (S3) relié en série avec l'un parmi le premier enroulement et le deuxième enroulement du transformateur (TR) et un moyen permettant de commander ledit commutateur (S3) conformément à l'état d'ouverture/de fermeture du commutateur (S1a, S1b) entre ladite entrée (In1, In2) et ladite sortie (Out1, Out2).

11. Circuit disjoncteur électrique (10) selon l'une quelconque des revendications 1 à 5, dans lequel ledit moyen (3) permettant de détecter l'impédance de charge comporte une unité de test d'alimentation électrique (PST) conçue pour injecter un courant pilote dans le circuit de charge électrique lorsque ledit commutateur (S1a, S1b) est ouvert.

12. Module de disjoncteur électrique (BM) comportant un circuit disjoncteur électrique (10) selon l'une quelconque des revendications précédentes.

13. Procédé de fonctionnement d'un circuit disjoncteur électrique (10) comportant un commutateur (S1a, S1b) agencé électriquement entre une entrée (In1, In2) reliée à une ligne d'alimentation électrique (30) et une sortie (Out1, Out2) reliée de manière à alimenter un circuit de charge électrique (20), permettant d'établir l'alimentation du circuit de charge électrique (20) en énergie électrique par la fermeture du commutateur (S1a, slb) et d'interrompre l'alimentation du circuit de charge électrique (20) en énergie électrique par l'ouverture du commutateur (S1a, s1b) ; le procédé comportant l'étape qui consiste :
à détecter (101) l'impédance de charge reliée à la sortie (Out1, Out2) dudit circuit disjoncteur électrique (10) ; **caractérisé par**
la génération (105) d'un signal de commande de fermeture (11) pour fermer ledit commutateur (S1a, S1b) lors de la détection d'une diminution (103) de l'impédance du circuit de charge électrique (20).

14. Procédé selon la revendication 13, comportant la génération dudit signal de commande de fermeture (11) à la condition (102) que ladite impédance basse soit au-dessus d'un seuil d'impédance minimal.

15. Procédé selon la revendication 13 ou 14, dans lequel, ledit signal de commande de fermeture (11) est généré à la condition que, pendant que ledit commutateur est ouvert, une augmentation de ladite impédance ait été détectée (102) avant ladite détection d'une diminution (103) de l'impédance.

16. Bâtiment (40) ayant une installation électrique comportant
un circuit disjoncteur électrique (10) selon l'une quelconque des revendications 1 à 12 pour une connexion à une ligne d'alimentation électrique (30) d'un service public et agencé dans un emplacement (41) inaccessible à des personnes qui ne sont pas autorisées par le service public ;
un circuit de charge électrique (20) relié audit circuit disjoncteur électrique (10) ; et
un moyen d'interruption (50) agencé de manière à pouvoir être actionné par un client du service public, pour interrompre et établir au moins une partie dudit circuit de charge électrique (20) pour modifier ainsi l'impédance de charge reliée à la sortie (Out1, Out2) du circuit disjoncteur électrique (10).
